Europäisches Patentamt

European Patent Office

Office européen des brevets

(19)

(11) **EP 0 695 447 B1**

(12) **EUROPEAN PATENT SPECIFICATION**

(45) Date of publication and mention
of the grant of the patent:
**18.08.1999 Bulletin 1999/33**

(21) Application number: **94912645.2**

(22) Date of filing: **19.04.1994**

(51) Int Cl.[6]: **G06F 15/80**

(86) International application number:
**PCT/GB94/00818**

(87) International publication number:
**WO 94/24637 (27.10.1994 Gazette 1994/24)**

(54) **HOPFIELD NEURAL NETWORK AND METHOD OF OPERATING IT**

HOPFIELD NEURONALES NETZWERK UND VERFAHREN ZU DESSEN BETRIEB

RESEAUX NEURONAUX DE HOPFIELD ET METHODE DES OPERER

(84) Designated Contracting States:
**BE CH DE ES FR GB IT LI NL SE**

(30) Priority: **20.04.1993 GB 9308165**

(43) Date of publication of application:
**07.02.1996 Bulletin 1996/06**

(73) Proprietor: **BRITISH TELECOMMUNICATIONS
public limited company
London EC1A 7AJ (GB)**

(72) Inventors:
• **GELL, Michael Anthony
Ipswich, Suffolk IP5 7TZ (GB)**
• **AMIN, Shara Jahal
Ipswich, Suffolk IP2 8BQ (GB)**
• **MANNING, Michael Robert Wistow
Ipswich, Suffolk IP4 5BX (GB)**
• **OLAFSSON, Sverrir
Kingston-Upon-Thames, Surrey KT2 6AG (GB)**

(74) Representative: **Roberts, Simon Christopher
BT Group Legal Services,
Intellectual Property Department,
8th Floor, Holborn Centre
120 Holborn
London, EC1N 2TE (GB)**

(56) References cited:
**EP-A- 0 340 742          US-A- 4 660 166**

• **IEEE TRANSACTIONS ON CIRCUITS AND
SYSTEMS, vol.38, no.1, January 1991, NEW
YORK US pages 42 - 56 TROUDET 'Neural
network architecture for crossbar switch
control' cited in the application**

• **IJCNN-91 : INTERNATIONAL JOINT
CONFERENCE ON NEURAL NETWORKS, vol.1,
8 July 1991, SEATTLE , USA pages 141 - 146 CHU
'Using a semi-asynchronous hopfield network to
obtain optimal coverage in logic minimization'
cited in the application**

• **IEEE INTERNATIONAL CONFERENCE ON
NEURAL NETWORKS, vol.2, 24 July 1988, SAN
DIEGO , USA pages 275 - 282 FOO 'Stochastic
neural networks for solving job-shop scheduling
: part 1. Problem representation' cited in the
application**

• **IJCNN INTERNATIONAL JOINT CONFERENCE
ON NEURAL NETWORKS, vol.4, 7 June 1992,
BALTIMORE , USA pages 624 - 629 UEDA
'Hopfield-type neural networks with fuzzy sets to
gather the convergent speed' cited in the
application**

• **BIOLOGICAL CYBERNETICS, vol.65, no.5,
September 1991, HEIDELBERG DE pages 331 -
338 NEELAKANTA 'Langevin machine: a neural
network based on stochastically justifiable
sigmoidal function' cited in the application**

• **IECON89 : 15TH ANNUAL CONFERENCE OF
IEEE INDUSTRIAL ELECTRONICS SOCIETY,
vol.1, 6 November 1989, PHILADELPHIA , USA
pages 759 - 763 CHEUNG 'Neuron variable
structure controller' cited in the application**

• **1993 IEEE INTERNATIONAL CONFERENCE ON
NEURAL NETWORKS, vol.1, 28 March 1993, SAN
FRANCISCO , USA pages 359 - 364 GHOSH 'A
temporal memory network with state-dependent
thresholds' cited in the application**

## Description

The present invention relates to an improved Hopfield neural network. Specifically, although not exclusively, the improved neural network may be used to control packet switching in a packet switching network.

In a packet switching network, information to be transmitted is digitised and then formed into small addressable packets which are then transmitted over a synchronous network. It is expected that the broad band switching systems of the future will make use of packet switching [1], and although it is generally agreed that such networks will rely on Asynchronous Transfer Mode (ATM), many challenges still exist in realising the necessary high speed packet switching technologies [2,3]. In particular, one of the essential features of such a system is the availability of fast packet switches to route the individual packets reliably and rapidly to their addressed destinations.

It has been proposed by a number of authors [4] to use neural networks for achieving ATM network control. More particularly, it has been proposed to apply the techniques of neural networks to switching and routing schemes; a general review of this field has been given by Brown [5].

In a recent study, Ali and Nguyen explored the use of a Hopfield network for controlling a high speed packet switch [6]. Use of a Hopfield neural network for control of a switch was first proposed by Marrakchi and Toudet [7]. Although Ali and Nguyen demonstrated that the Hopfield dynamical network could be used to obtain high solution accuracy, long simulation times are still a problem. This puts severe restrictions on the size of the switching system which can be studied. Although the approach used by Ali and Nguyen was an impressive advance, it was to a large extent ad hoc and resulted in proposals for a network which was not only sub-optimal so far as speed of operation was concerned, but which also could not be guaranteed to converge to a valid solution.

Various attempts have been made to improve convergence speed, one technique being to alter the threshold function of the neurons as calculations proceed, to direct operation of the network to the desired result. Such an approach has been used by Honeywell [11]. An alternative approach, used for example by Foo et al [15], is to apply constant biases to certain of the neurons to enforce operation precedence relationships. Although both of these approaches may be of assistance in certain circumstances, they do not address the central problem of preventing the calculations from becoming extremely lengthy and unwieldy, and hence slow, for large networks having many active neurons.

A common aim of researchers in the neural network field is to design a robust network which does not easily get trapped in local minima. Various approaches have been used to improve network robustness, including the use of a transfer function which changes with time in a defined way. Ueda et al [16] discloses the use of a time-varying transfer function which gradually becomes sharper as the calculation proceeds. Neelakanta et al [17] uses a rather similar approach, but based upon the analogy of a gradually decreasing annealing temperature. Cheung [18] and Gsosh [19] disclose other approaches for changing the operation of individual neurons in a defined way as the calculations proceeds.

In order to optimise the type of neural network now referred to by his name, Hopfield suggested first of all determining an energy function for the problem to be solved, and then comparing that energy function with what is now called the Hopfield Energy Function to determine the weights and biases for the network. Such a method is described in, for example, Hopfield [13] and Chu [14]. The present applicants have found, surprisingly, that using an extension of this technique considerably more information can be obtained to assist in optimising the network.

Neural networks have been applied in a variety of circumstances, and these include routing systems and crossbar switches - see for example Fujitsu [20] and Troudet et al [12].

It is an object of the present invention to provide an improved neural network, based upon the Hopfield model, and particularly for use in operating high speed packet switches (although many other applications may be envisaged).

It is a further object to improve on the work of Ali and Nguyen [6] and to provide a neural network which converges more rapidly to a guaranteed, or virtually guaranteed, valid solution.

It is a further object of the present invention to provide an improved general purpose neural network, based upon the Hopfield model, which will have applications in many technical fields.

According to a first aspect of the present invention there is provided a method of operating a Hopfield network incorporating neurons having a transfer function with a graded response, the transfer function being a sigmoid function the method comprising repeatedly updating the neuron outputs according to an updating rule, characterised in that the transfer function has at least one parameter which controls the steepness of the transfer function changes randomly or pseudorandomly between iterations.

The invention also extends to apparatus for carrying out the method, and accordingly also extends to a Hopfield network incorporating neurons having a transfer function with a graded response, the transfer function being a sigmoid function, the network including means for updating the neuron outputs according to an updating rule, characterised by means for varying a parameter controlling the steepness of the transfer function randomly or pseudorandomly between iterations.

Changing the updating rule from iteration to iteration introduces noise into the system, and enables the algorithm to avoid at least some of the non-global minima in which it might otherwise become trapped. This may be achieved by randomly or pseudo randomly changing the constant (β) of a sigmoid function.

The preferred application of the present invention is in a telecommunications switch, preferably in a packet switching system. The practical realisation of the switch will depend very much on the application, and the limitation of the various technologies involved. VLSI, optics, software and so on could all be exploited.

The neural network could be embodied either in hardware or in software. It could also be split between the two (hybridware).

In a practical embodiment, a packet switch will desirably be associated with a separate queue manager, which sits in front of the switch, and provides prioritisation information to the neural network. If an incoming packet is experiencing unacceptable delay (or alternatively if an incoming packet is designated as having a high priority), the queue manager may modify the input matrix to the neural network to take account of the desired sequencing. The function of the queue manager could be achieved using conventional, neural, genetic algorithm, fuzzy algorithm or hybrid techniques.

In implementations in which the present invention is used for problem solving other than in telecommunications switches, it may still be desirable to have an input manager, sitting in front of the neural network, and modifying the input matrix according to known constraints on the problem to be solved. In particular, the input manager will provide the neural network with prioritisation information where the network is undertaking some sort of sequencing task.

The invention may be carried into practice in a number of ways and one specific embodiment will now be described, by way of example, illustrating the use of the present invention in the field of high speed packet switching. The description of the preferred embodiment will refer to the accompanying drawings, in which:

Figure 1 is a schematic diagram of a high speed packet switch;
Figure 2 is a graph showing the Sigmoid function for values of β of 0.08 and 0.16;
Figure 3 shows the relationship of the neural network and the queue manager.

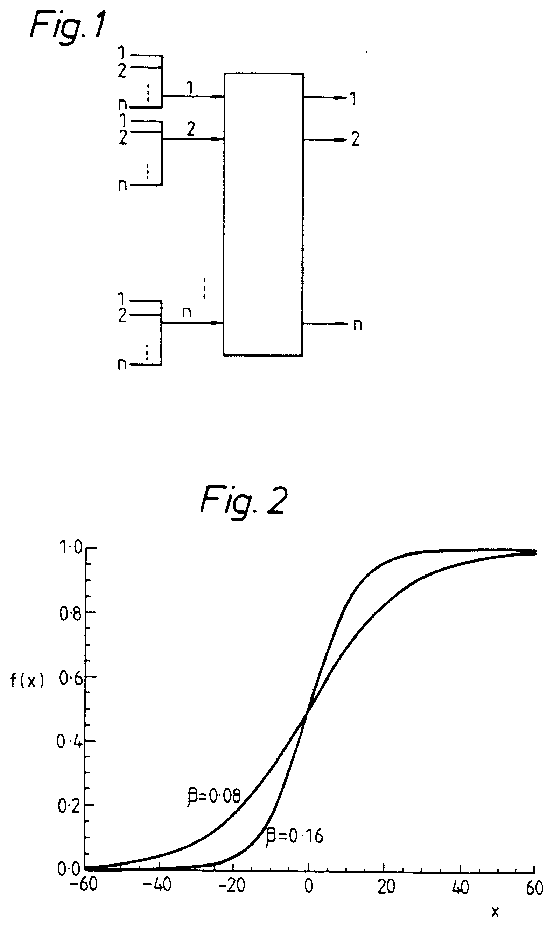

The specific embodiment relates particularly to a neural network for operating a high speed packet switch, of the type illustrated in Figure 1. This figure is adapted from a similar drawing in Ali and Nguyen [6]. The purpose of a switch is to ensure that the addressed packets within the system are rapidly routed to their correct destination, along their respective requested pathways. A typical switch has a plurality of inputs and a plurality of outputs, the inputs receiving the packets to be routed and the outputs being connected to the various available pathways. Thus, an incoming packet on input 1 may request to be routed via any one of the switch's outputs. Similarly, packets arriving on any of the other inputs may request to be routed to any output.

As will be seen from Figure 1, the switch of the present embodiment is an nxn switch; in other words there are n inputs and n outputs. Each of the n inputs has N separate input queues, one for each of the outputs. Accordingly, an incoming package on input 1 which requests to be routed to output 1 will be queued in the first queue of input 1. Other packets on that input requesting to be routed to output 2 would be stored on the second queue of input 1, and so on. It will be evident that there are a total of $n^2$ input queues.

The switch is operated synchronously, and its task is to transfer the packets from the input queues as rapidly as possible, to the requested outputs. Where the requests for transfers are arriving more rapidly than the capacity of the switch, the switch has to choose the packets from the various input queues in such a way as to maximise the throughput. In the present embodiment, it is a neural network which solves this optimisation problem.

Following the method of Ali and Nguyen [6], a Hopfield neural network is used. The general Hopfield energy function is compared with the calculated energy function that will maximise the throughput to give the desired differential equation which is the solution to the switching problem. The differential equation includes undefined constants (optimisation parameters) which Ali and Nguyen determined by simulation.

We will start by considering the basic Hopfield model, and then go on to consider how this can be used to deal with the particular switching problem under consideration.

## Hopfield Neural Network - Basic Model

The neural network used in this present embodiment is the Hopfield model [8,9], this consists of a large number of processing elements (the neural cells) which are interconnected via neural weights. At any moment in time, each neuron can be described by two continuous variables, the neural activity level $x_{ij}$ and the neural output $y_{ij}$. These variables are related by the non-linear processing function f, as follows:

$$y_{ij} = f(x_{ij}) \tag{1}$$

where f is taken to be some non-linear monotonically increasing function. This function is called the activation (or transfer) function. The exact form of f is not particularly important, and any appropriate non-linear monotonically increasing function could be used. In the preferred embodiment, however, f is taken to be the sigmoid function

$$f(x) = \frac{1}{1+\exp(-\beta x)} \qquad (2)$$

where $\beta$ is the gain factor, which controls the steepness of the sigmoid function, as illustrated in Figure 2.

The Hopfield equation describing the dynamics of a an individual neuron is given by

$$\frac{dx_{ij}}{dt} = -ax_{ij} + \sum_{k,l=1}^{n} T_{ij,kl} y_{kl} + I_{ij}$$

$$(3)$$

where $T_{ij,kl}$ is the weight matrix which described the connection strength between the neurons indexed by (ij) and (kl). $I_{ij}$ describes the external bias (sometimes referred to as the "external bias current") which is supplied to each neuron.

Hopfield has shown that for the case of symmetric connections $T_{ij,kl}=T_{kl,ij}$ and a monotonically increasing processing function f, the dynamical system (3) possesses a Lyapunov (energy) function which continually decreases with time. The existence of such a function guarantees that the system converges towards equilibrium states. These equilibrium states are often referred to as "point attractors".

The Hopfield-Energy function is of the following form:

$$E = -\sum_{i,j,k,l=1}^{n} T_{ij,kl} y_{ij} y_{kl} - \sum_{i,j=1}^{n} I_{ij} y_{ij} + \sum_{i,j=1}^{n} \cdot \lambda_{ij} \int_{0}^{f(x_{ij})} f^{-1}(x'_{ij}) \, dx'_{ij}$$

$$(4)$$

where the $\lambda_{ij}$ are positive constants, and x' is the dummy variable over which the integration is made. This equation is set out in Hopfield [8].

It is easily established that with $\lambda_{ij}=a$ for all ij, the equation of motion (3) can be written as

$$\dot{x}_{ij} = -\frac{\partial E}{\partial y_{ij}} \qquad (5)$$

where the dot denotes differentiation with respect to time. From this relation we derive the partial differential equation

$$\dot{E} = -\sum_{i,j=1}^{n} \left( \frac{\partial E}{\partial y_{ij}} \dot{y}_{ij} + \frac{\partial E}{\partial x_{ij}} \dot{x}_{ij} \right) = -2 \sum_{i,j=1}^{n} \frac{\partial f}{\partial x_{ij}} \left( \frac{\partial E}{\partial y_{ij}} \right)^2 \le 0$$

$$(6)$$

The inequality follows from the fact that the processing function (2) is monotonically increasing. If we drop the integral term in (4) (as is usual in calculations of this sort) the time derivative of the energy function becomes

$$\dot{E} = -\sum_{i,j=1}^{n}\left(\sum_{k,l=1}^{n}T_{ij,kl}y_{kl}+I_{ij}\right)\left(\frac{df(x_{ij})}{dx_{ij}}\right)\left(\sum_{p,q=1}^{n}T_{ij,pq}y_{pq}+I_{ij}\right)$$
$$+\sum_{i,j=1}^{n}ax_{ij}\left(\frac{df(x_{ij})}{dx_{ij}}\right)\left(\sum_{k,l=1}^{n}T_{ij,kl}y_{kl}+I_{ij}\right)$$

$$(7)$$

If we are to obtain convergence, the equation (4) must continually decrease, and hence the right hand side of equation 7 must be less than or equal to 0. In general, this would not be the case, because of the second term on the right hand side. But in the large gain limit (in other words as the equation (2) tends towards a step function, and $\beta$ is large) the derivative $df_{ij}/dx_{ij}$ becomes a delta function and therefore $(df_{ij}/dx_{ij})x_{ij}$ tends to zero. This establishes a result discussed by Hopfield [8]. Accordingly, provided that the value of $\beta$ in equation (2) is appropriately chosen, we can be certain that the system converges and that at equilibrium we have not introduced any inaccuracies by dropping the integral term from equation (4).

There are other approaches to making a Lyapunov function, for example making the decay a zero in the dynamical equation. While this approach has been discussed by Aiyer et al [10], it is not the preferred approach in the present embodiment and accordingly will not be discussed further.

## Formulation of the Switching Problem for Neural Network Solution:

Referring back to Figure 1, it will be recalled that we are concerned with solving an optimisation problem for a square switch of size n x n. We will use the method of Brown, and Ali and Nguyen [5,6] to define the status of the switch at any time as an n x n binary matrix which will be designated y. Let $r_{ij}$ be the number of packets at input i requesting a connection to the output j. The status of each input queue is given as an initial condition to a neuron; so, for an n x n switching fabric a total of $n^2$ neurons are required. The initial conditions of the neurons (in other words the status of the input queues) are then represented by the matrix

$$y = \begin{pmatrix} y_{11} & \cdots & y_{1n} \\ \cdots & \cdots & \cdots \\ y_{n1} & \cdots & y_{nn} \end{pmatrix} .$$

$$(9)$$

Where

$$y_{ij} = \begin{Bmatrix} 0 & if & r_{ij}=0 \\ 1 & if & r_{ij}\geq 1 \end{Bmatrix}$$

$$(10)$$

In other words, $r_{ij}$ is unity if a particular input queue is busy, and is zero if it is idle. In this formulation, the rows of the matrix **y** represent the input lines, and the columns represent the output lines. Every index pair (ij) defines a connection channel.

During each time slot, only one packet can be permitted per channel: in other words, during each time slot at most one packet may be sent to each of the outputs, and at most one packet may be chosen from each of the inputs. The task of the neural network is to take the input matrix **y**, and operate upon it, repeatedly, to produce an output or configuration matrix which actually sets up the channel connections, that is defined the packets that are to be chosen to achieve maximum throughput within the switching constraints.

Given the switching constraints, it is clear that the output (configuration) matrix can have at most one non-vanishing element in each row and one non-vanishing element in each column. More than a single element in each row, or a single element in each column, would mean that the switching constraints have been violated in that the switch was either trying to pass two packets at once from a single input or to pass two packets at once to a single output.

If the input matrix contains more than one non-vanishing element in any row, or more than one non-vanishing element in any column, then there are more requests for connections than the switch can handle during that time slot. Since only one input can be connected to one output at any time, the switching mechanism will have to choose only one request and force the rest to wait.

To take an example, if there are requests that each of the inputs for packets to be transmitted to all of the outputs, the input matrix **y** will be

$$\begin{pmatrix} 1 & 1 & 1 \\ 1 & 1 & 1 \\ 1 & 1 & 1 \end{pmatrix}$$

For that input equation, the output (configuration) matrices that maximise the packet flow through the switch are as follows:

$$\begin{pmatrix} 1 & 0 & 0 \\ 0 & 1 & 0 \\ 0 & 0 & 1 \end{pmatrix}, \begin{pmatrix} 1 & 0 & 0 \\ 0 & 0 & 1 \\ 0 & 1 & 0 \end{pmatrix}, \begin{pmatrix} 0 & 1 & 0 \\ 1 & 0 & 0 \\ 0 & 0 & 1 \end{pmatrix}, \begin{pmatrix} 0 & 0 & 1 \\ 1 & 0 & 0 \\ 0 & 1 & 0 \end{pmatrix}, \begin{pmatrix} 0 & 0 & 1 \\ 0 & 1 & 0 \\ 1 & 0 & 0 \end{pmatrix}, \begin{pmatrix} 0 & 1 & 0 \\ 0 & 0 & 1 \\ 1 & 0 & 0 \end{pmatrix}$$

Each of these will be called "valid" solutions because they both satisfy the switching constraints and they also maximise the switch throughput. Other configuration equations such as

$$\begin{pmatrix} 0 & 0 & 0 \\ 0 & 1 & 0 \\ 0 & 0 & 1 \end{pmatrix}, \begin{pmatrix} 1 & 1 & 0 \\ 1 & 0 & 0 \\ 0 & 0 & 1 \end{pmatrix}$$

are not valid. The first of these satisfies the switching constraints but does not maximise the throughput because no packet is chosen from the first input even through there is at least one packet waiting. The second matrix violates the switching constraints in that it attempts to select two packets at once from the first input, and to send two packets at once to the first output.

Sometimes, of course, there will not be packets waiting at each of the inputs, and the input matrix y will not be full. In that case, the number of valid solutions will be fewer. To take an example, if the input matrix is as follows:

$$\begin{pmatrix} 0 & 0 & 0 \\ 1 & 0 & 1 \\ 1 & 1 & 1 \end{pmatrix}$$

The valid output matrices are

$$\begin{pmatrix} 0 & 0 & 0 \\ 1 & 0 & 0 \\ 0 & 1 & 0 \end{pmatrix}, \begin{pmatrix} 0 & 0 & 0 \\ 1 & 0 & 0 \\ 0 & 0 & 1 \end{pmatrix}, \begin{pmatrix} 0 & 0 & 0 \\ 0 & 0 & 1 \\ 1 & 0 & 0 \end{pmatrix}, \begin{pmatrix} 0 & 0 & 0 \\ 0 & 0 & 1 \\ 0 & 1 & 0 \end{pmatrix}$$

It should be noted that if a row or column of the input matrix contains only zero entries, then in the nomenclature we are using, the resultant output or configuration matrix is valid only if that also contains only zeros in the corresponding rows and/or columns. Otherwise, connections would be made by the switch even through there was no request for such a connection. The following matrix:

$$\begin{pmatrix} 0 & 0 & 1 \\ 1 & 0 & 0 \\ 0 & 1 & 0 \end{pmatrix}$$

would not be a valid configuration matrix, even though it maximises the throughput of the switch and does not violate the switching constraints, because it sets up a connection between the first input line and the third output line which was not requested by any incoming packet.

### Avoidance of Local Minima:

In any system in which the equations of motion are determined by a continually reducing energy function, there is a risk that the system may become trapped at a local minimum of the energy function. In the present embodiment, that would be equivalent to convergence upon a solution which satisfied the switching constraints but was merely a local maximum for the switch throughput, and not the global maximum. Where there is no foolproof method of avoiding convergence onto local minima, we propose that in practice some "noise" should be introduced into the system to avoid spurious convergences as far as possible. We achieve this, as the neural network is calculating its solution, by randomly varying the value of $\beta$ in equation (2). In the first iteration, the value of $\beta$ is set at 0.08, and in subsequent iterations the value of $\beta$ is randomly chosen to lie somewhere within the range 0.08 to 0.16. $\beta$, of course, is the gain factor which controls the steepness of the sigmoid function, as illustrated in Figure 1. Where $\beta$ is taken at a value of greater than 0.08 (see equation 21(c)), the maximum amount of noise can be taken to be equivalent to the value of $\beta$.

### Imposed Attractors:

A network to be used for switching purposes will normally be sparsely connected. This is easily seen as the first term on the right hand side of equation (12) is non-zero only if $i=k$ and $j$ does not equal $k$. This gives $n^2(n-1)$ connections. The second term has equally many non-vanishing contributions. The connection matrix (12) therefore defines $2n^2(n-1)$ connections. This has to be compared with the maximum possible number of connections that a network of $n^2$ neurons can have: that is $n^4-n^2$.

As has previously been mentioned, if the input matrix contains a null row or a null column, it is desirable that the output matrix should also contain a corresponding null row or column, since otherwise the neural network will have introduced connections where none have been requested. The energy function (11) and the connection matrix (12) do not guarantee this to be the case. This follows from the fact that the energy function (11) does not take on minima if one of the rows or columns have only vanishing entries. To avoid this occurrence, we propose that the null rows and columns should be decoupled from the Hopfield dynamics. We have found in practice that this both improves the convergence of the other neurons, and also permits considerable increases in speed to be achieved.

The null rows and columns may be decoupled from the Hopfield dynamics in a number of ways. One simple mechanism would simply be not to include the null rows and columns at all in any of the calculations. An alternative, and preferred, method is to force all of the neurons in a null row or a null column onto the negative attractor. What we do in practice is to decouple the input to the null rows and columns from all the other neurons. However, their constant outputs are still coupled. Hence the forced neurons remain fixed at all times at the negative attractor, but their outputs are still fed into the rest of the calculations, and will affect time evolution of the unforced neurons. The external biases of all the forced neurons are set to zero.

If we call the imposed attractor $x_3$, to distinguish it from the positive and negative attractors $x_1$ and $x_2$ of equations (16) and (18), we can use an equivalent to equation (16) to provide us with some idea of what the imposed attractor should be to ensure that the respective neuron always converges on zero. Since $A=B$ and $A$ is very much greater than $C$, we have from equation (16) the approximate equation

$$x_3 = -2A \tag{22}$$

## Queue Manager:

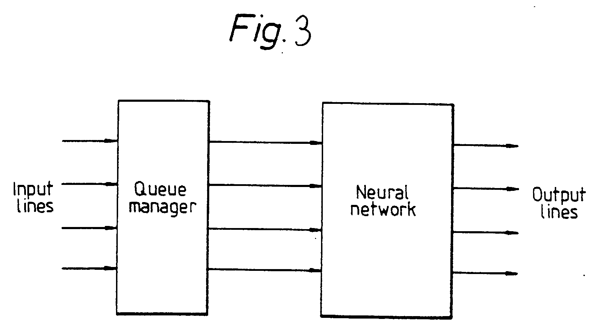

In a practical embodiment of the present invention it may be necessary for particular arrangements to be made to deal with incoming packets that are experiencing unacceptable delays, are required to have a particularly high priority, or other specific sequencing requirements. In the preferred embodiment, therefore, there would be a queue manager which would sit in front of the Neural network and provide prioritisation labels or arrangements for the incoming traffic. This is shown schematically in Figure 3.

If an incoming packet is experiencing an unacceptable delay (or alternatively if a critical packet has been designated as having a high priority), the queue manager will modify the input matrix (9) to take account of the desired sequencing. When the queue manager receives a packet from the input line, it will examine the destination address to determine the appropriate destination output line. It will also determine the priority and/or delay of that particular packet. Based upon the information it has read, it will then appropriately update the input matrix (9), so changing the initial conditions that the neural network has to operate upon. It may also impose attractors, either positive or negative, or in other ways decouple certain neurons from the network according to the requested priorities of the individual packets.

The function of the queue manager could be achieved using conventional, neural, genetic algorithm, fuzzy algorithm or hybrid techniques.

One particular function that might be provided by the queue manager would be to adjust the input matrix (9) to take account of the fact that there may be more than one packet which is waiting for the particular connection. If a large number of packets start to build up, all waiting for a particular connection, the queue manager should have some mechanism for effectively increasing the priority of those packets to ensure that the queue does not become unacceptably long. An alternative method of achieving the same result might be to make use of an input request matrix in which each element is not merely 0 or 1, but is an integer representing the number of packets that are awaiting that particular connection. The higher the number waiting for a particular connection, the greater would be the initial value of y, according to equations (1) and (2), and accordingly the greater likelihood there would be of that particular neuron converging to the value 1.

## Calculation Procedure:

Finally, we will turn to the computational procedure to be used in operating the neural network. The procedure will effectively be the same, whether the network is embodied in hardware or in software.

The procedure is as follows:

1. Receive the input request matrix, which contains 0's and 1's in the simplest case, indicating which connections are requested and which are not.
2. To centre the request matrix on 0, convert the 0's to -2A's (the negative attractor).
3. [Optional] Use the queue manager to make any appropriate amendments to the resultant matrix, for example to allow for higher priority on certain requests. Higher priority would be achieved by replacing a particular 1 entry with a higher number. At the same time, the queue manager will set up any imposed negative attractors that may be required by changing the corresponding entries to large negative numbers, (eg-2A), and at the same time will arrange for those neurons to be decoupled from the others (as explained above) before calculations start.
4. The modified input matrix is then replaced by a neuron matrix using equation (2)

The elements of this neuron matrix are the $y_{ij}$. The parameter $\beta$ is set randomly within the range 0.08 to 0.16. In the first iteration of step 4, it is set at $\beta=0.08$.

5. Iterate the differential equation (13a) (which contains the parameters A, B and C) to calculate new values of $x_{ij}$. The step length $\Delta t$ may be, for example, 0.2.
6. Go to step 4, unless the system has converged, that is unless the $y_{ij}$ have not changed by a given amount since the last iteration. If all the neurons have converged, stop.

## Practical Realisation:

The network of the present invention could be embodied either in hardware or in software, or in a combination of the two. Potential hardware technologies would include VLSI, optics and so on. The environment in which the network is to be embedded will of course play a key role in the determination of the medium. For example, if speed is of the essence, a hardware implementation would appear preferable, but of course that has to be offset against the fact that hardware implementations for large switches would be exceedingly complicated. A specification for a hardware (electrical) realisation of a Hopfield neural network has already been published by Brown [5]. The various parameters in the Hopfield model can be related to values of the various electrical components in the circuitry.

It is expected that the present invention will have application in very many different fields, and in particular to any problem in which a Hopfield energy can be calculated, and there is a requirement for an input matrix having at most one non-vanishing element per row and at most one non-vanishing element per column, in other words where the problem is equivalent to the Travelling Salesman Problem. Potential application areas include network and service management (including switching of lines, channels, cards, circuits, networks etc.); congestion control; distributed computer systems (including load balancing in microprocessor systems, cards, circuits etc.) and decentralized computer systems; work management systems; financial transaction systems (in banking, stockmarkets, shops etc.); traffic scheduling (airlines, trains, underground, shipping etc.); alternated production lines; reservation, storage and cargo systems (including airline, stock etc.); general scheduling and resource allocation problems; general channel assignment problems; fluid control systems (including oil, gas, chemical etc.); general control systems (including nuclear, cars, airlines, transport systems etc.); system management systems (including satellite, mobile, audio etc.); robotic systems dealing with task assignment; task assignment in general; real time data acquisition and analysis systems; and queuing delay procedures.

**The continuous case**

The present work can be extended to the continuous case, where the inputs to the network can take on any value within a given range, rather than being restricted to 0 and 1. One particular way of doing this, as previously described, would be to allow the inputs to be any positive integer, for example an integer corresponding to the number of packets awaiting switching in the respective queue. Alternatively, the inputs could be truly continuous (not just stepped).

The inputs may be multiplied by a spread factor f, prior to the network calculations being started, to vary the range that the input values span. Because the network calculations are non-linear, altering the input range may have profound effects on the operation and speed of convergence of the net.

In the truly continuous case the addition of noise is to be avoided. Imposed attractors may be used but, in practice, it has been found that they do not add very much speed to the speed of convergence of the net in many cases.

The continuous case can be considered for performing first order task assignment in a multi-service or heterogenous environment by maximising the sum of indicators of suitability of tasks for the chosen resources. The network can also be used for higher order task assignment taking into account, amongst others, intertask communication costs. Application areas include, amongst others, network and service management, distributed computer systems, systems for work management, financial transactions, traffic scheduling, reservation, storage, cargo handling, database control, automated production, and general scheduling, control or resource allocation problems.

**REFERENCES**

[1] A Pattavini, 'Broadband Switching Systems: First Generation' , European Transactions on Telecommunications, Vol 2, No 1, p75, 1991.

[2] M Listanti and A Roveri, 'Integrated Services Digital networks: Broadband Networks', European Transactions on Telecommunications, Vol 2, No 1, p59, 1991.

[3] CCITT, Draft Recommendation I.150: B-ISDN ATM Aspects, Geneva, January 1990.

[4] A Hiramatsu, "ATM Communications Network Control by Neural Networks', IEEE Transactions on Neural networks, Vol 1, No 1, p122, March 1990.

[5] T X Brown, 'Neural Networks for Switching from E C Posner, Ed', 'Special Issue on Neural Networks in Communications', IEEE Communications Magazine, p72, November 1989; see also A Maren, C Hartson and R Rap, 'Handbook of Neural Computing Applications', Academic Press, London, 1990.

[6] M M Ali and H T Nguyen, 'A Neural Network Controller for a High- Speed Packet Switch' Proc. Int. Telecommunications Symposium 1990, pp. 493-497.

[7] A Marrakchi and T Troudet, 'A Neural Network Arbitrator for Large Crossbar Packet Switches', in IEEE Transactions on Circuits and Systems, Vol 36, No 7, p1039, 1989.

[8] J J Hopfield, Neurons with graded response have collective computational properties like those of two-state neurons. Proc. Natl. Sci. USA Vol.81, pp 3088-3092, Biophysics, May 1984.

[9] A good discussions of Hopfield networks and further references is given in J Hertz, A Krogh and R G Palmer, 'Introduction to the Theory of Neural Computation', Addison-Wesley, Redwood City, 1991.

[10] S.V. Aiyer, M. Niranjan and F. Fallside, A Theoretical Investigation into the performance of the Hopfield Model. IEE Transactions on Neural Networks, Vol 1, No 2, June 1990.

[11] Honeywell Inc, EP-A-0 340 742.

[12] Troudet et al, IEEE Transactions on Circuits and Systems, vol. 38, no. 1, January 1991, New York, US, pages 42 - 56.

[13] J J Hopfield, US-A-4 660 166

[14] P P Chu, IJCNN-91: International Joint Conference on Neural Networks, vol. 1, 8 July 1991, Seattle, USA, pages 141 - 146.

[15] Y S Foo, IEEE International Conference on Neural Networks, vol. 2, 24 July 1988, San Diego, USA, pages 275 - 282.

[16] Ueda et al, IJCNN International Joint Conference on Neural Networks, vol. 4, 7 June 1992, Baltimore, USA, pages 624 - 629.

[17] Neelakanta et al, Biological Cybernetics, vol. 65, no. 5, September 1991, Heidelberg, Germany, pages 331 - 338.

[18] Cheung et al, IECON89, 15th Annual Conference of IEEE Industrial Electronics Society, vol. 1, 6 November 1989, Philadelphia, USA, pages 759 - 763.

[19] Ghosh et al, 1993 IEEE International Conference on Neural Networks, vol. 1, 28 March 1993, San Francisco, USA, pages 359 - 364.

[20] Fujitsui Limited, EP-A-475 233.

## Claims

1. A method of operating a Hopfield network incorporating neurons having a transfer function with a graded response, the transfer function being a sigmoid function the method comprising repeatedly updating the neuron outputs according to an updating rule, characterised in that the transfer function has at least one parameter which controls the steepness of the transfer function and changes randomly or pseudorandomly between iterations.

2. A method as claimed in Claim 1 in which the parameter is a non-monotonic function of the iteration number.

3. A method as claimed in Claim 1 or Claim 2 in which the transfer function is defined by y=f(x), where x is the neuron input, y is the neuron output, and

$$f(x) = \frac{1}{1+\exp(-\beta x)}$$

$\beta$ being the said parameter.

4. A method of operating a telecommunications switch using a method of operating a Hopfield network as claimed in any one of the preceding claims.

5. A method of operating a telecommunications switch as claimed in Claim 4 in which the switch is a packet switch.

6. A Hopfield network incorporating neurons having a transfer function with a graded response, the transfer function being a sigmoid function, the network including means for updating the neuron outputs according to an updating rule, characterised by means for varying a parameter controlling the steepness of the transfer function randomly or pseudorandomly between iterations.

7. A telecommunications switch incorporating a Hopfield network as claimed in Claim 6.

8. A telecommunications switch as claimed in Claim 7 including a queue manager adapted to amend the initial conditions, prior to operating the neural network, in dependence upon the priorities of calls waiting to be switched.

9. A telecommunications switch as claimed in Claim 7 or Claim 8 in which the switch is a packet switch.

10. A telecommunictions network incorporating a switch as claimed in any one of claims 7 to 9.


**Patentansprüche**

1. Verfahren zum Betreiben eines Hopfield-Netzes mit Neuronen mit einer Transferfunktion mit abgestufter Reaktion, wobei die Transferfunktion eine S-förmige Funktion ist, wobei das Verfahren das wiederholte Aktualisieren der neuronalen Ausgänge entsprechend einer Aktualisierungsregel umfaßt,
dadurch gekennzeichnet, daß
die Transferfunktion wenigstens einen Parameter aufweist, der die Steigung der Transferfunktion bestimmt und der sich zufällig oder pseudozufällig zwischen Iterationen ändert.

2. Verfahren nach Anspruch 1, bei dem der Parameter eine nicht-monotone Funktion der Iterationsziffer ist.

3. Verfahren nach Anspruch 1 oder 2, bei dem die Transferfunktion definiert ist durch y = f(x), wobei x der neuronale Eingang ist, y der neuronale Ausgang ist und

$$f(x) = 1/(1 + \exp(-\beta x)),$$

wobei β der Parameter ist.

4. Verfahren zum Betreiben eines Telekommunikationsschalters unter Verwendung eines Verfahrens zum Betreiben eines Hopfield-Netzes nach einem der vorangehenden Ansprüche.

5. Verfahren zum Betreiben eines Telekommunikationsschalters nach Anspruch 4, bei dem der Schalter ein Paketschalter ist.

6. Ein Hopfield-Netz mit Neuronen mit einer Transferfunktion mit einer abgestuften Reaktion, wobei die Transferfunktion eine S-förmige Funktion ist, wobei das Netz eine Vorrichtung zum Aktualisieren der neuronalen Ausgangssignale gemäß einer Aktualisierungsregel umfaßt, gekennzeichnet durch eine Vorrichtung zum Variieren eines Parameters, der die Steigung der Transferfunktion vorgibt, auf zufällige oder pseudozufällige Art zwischen Iterationen.

7. Telekommunikationsschalter mit einem Hopfield-Netz nach Anspruch 6.

8. Telekommunikationsschalter nach Anspruch 7 mit einem Queue-Manager, der zum Verbessern der ursprünglichen Bedingungen vor dem Betreiben des neuronalen Netzes in Abhängigkeit von den Prioritäten von Anrufen, die darauf warten, durchgeschaltet zu werden, angepaßt wird.

9. Telekommunikationsschalter nach Anspruch 7 oder 8, bei dem der Schalter ein Paketschalter ist.

10. Telekommunikationsnetz mit einem Schalter nach einem der Ansprüche 7 bis 9.

**Revendications**

1. Procédé de mise en oeuvre d'un réseau de Hopfield incorporant des neurones présentant une fonction de transfert avec une réponse proportionnée, la fonction de transfert étant une fonction sigmoïde, le procédé comprenant la mise à jour répétitive des sorties des neurones conformément à une règle de mise à jour, caractérisé en ce que la fonction de transfert présente au moins un paramètre qui commande la raideur de la fonction de transfert et varie de façon aléatoire ou pseudo-aléatoire entre les itérations.

2. Procédé selon la revendication 1, dans lequel le paramètre est une fonction non monotone du nombre d'itérations.

3. Procédé selon la revendication 1 ou la revendication 2, dans lequel la fonction de transfert est définie par y = f(x), où x est l'entrée du neurone, y est la sortie du neurone, et

$$f(x) = \frac{1}{1 + \exp(-\beta x)}$$

β étant ledit paramètre.

4. Procédé de mise en oeuvre d'un commutateur de télécommunications utilisant un procédé de mise en oeuvre d'un réseau de Hopfield selon l'une quelconque des revendications précédentes.

5. Procédé de mise en oeuvre d'un commutateur de télécommunications selon la revendication 4, dans lequel le commutateur est un commutateur par paquets.

6. Réseau de Hopfield incorporant des neurones présentant une fonction de transfert avec une réponse proportionnée, la fonction de transfert étant une fonction sigmoïde, le réseau comprenant un moyen destiné à mettre à jour les sorties des neurones conformément à une règle de mise à jour, caractérisé par un moyen destiné à faire varier un paramètre commandant la raideur de la fonction de transfert de façon aléatoire ou pseudo-aléatoire entre les itérations.

7. Commutateur de télécommunications incorporant un réseau de Hopfield selon la revendication 6.

8. Commutateur de télécommunications selon la revendication 7, comprenant un gestionnaire de files d'attente conçu pour modifier les conditions initiales, avant de mettre en oeuvre le réseau neuronal, suivant les priorités des appels attendant d'être commutés.

9. Commutateur de télécommunications selon la revendication 7 ou la revendication 8, dans lequel le commutateur est un commutateur par paquets.

10. Réseau de télécommunications incorporant un commutateur selon l'une quelconque des revendications 7 à 9.

*Fig.1*

*Fig. 2*

# Fig. 3

Input lines → Queue manager → Neural network → Output lines